# EUROPÄISCHE PATENTSCHRIFT

(11) **EP 2 349 746 B1**
(45) Veröffentlichungstag und Bekanntmachung des Hinweises auf die Patenterteilung: **16.01.2013**
(21) Anmeldenummer: 09783961.7
(22) Anmeldetag: 13.10.2009
(51) Int. Cl.: B60C 11/03, B60C 11/04

(54) **FAHRZEUGLUFTREIFEN**
PNEUMATIC VEHICLE TIRE
PNEUMATIQUE DE VÉHICULE

(30) Priorität: 30.10.2008 DE 102008037497
(43) Veröffentlichungstag der Anmeldung: 03.08.2011
(73) Patentinhaber: Continental Reifen Deutschland GmbH, 30165 Hannover (DE)
(72) Erfinder: BEHR, Ulrich, 30169 Hannover (DE); WOIDKTE, Oliver, 30855 Langenhagen (DE); BAUER, Claudia, 31542 Bad Nenndorf (DE)
(74) Vertreter: Finger, Karsten
(86) Internationale Anmeldenummer: PCT/EP2009/063304
(87) Internationale Veröffentlichungsnummer: WO 2010/049264

(56) Entgegenhaltungen:
- EP-A- 1 541 383
- JP-A- 60 203 505

## Beschreibung

Die Erfindung betrifft einen Fahrzeugluftreifen mit einem Laufstreifen, welcher durch Umfangsrillen und Querrillen in Profilelemente, wie Profilblöcke oder Umfangsrippen, gegliedert ist, und welcher eine, bezogen auf ein Fahrzeug, außenseitig gelegene Außenschulter und eine der Fahrzeuglängsachse zugewandte Innenschulter aufweist, wobei der Laufstreifen zumindest eine Umfangsrille mit einem sich über den Umfang des Laufstreifens erstreckenden Rillengrund und mit beidseitig des Rillengrundes sich radial nach außen erstreckende, die Umfangsrille begrenzenden Rillenflanken aufweist, wobei die der Außenschulter zugewandte Rillenflanke der Umfangsrille unter einem ersten Neigungswinkel zur radialen Richtung verläuft und die dieser gegenüber liegende Rillenflanke zwei Flankenabschnitte aufweist, wobei der radial äußere Flankenabschnitt unter einem zweiten Neigungswinkel zur radialen Richtung und der radial innere Flankenabschnitt unter einem dritten Neigungswinkel zur radialen Richtung verläuft, wobei der dritte Neigungswinkel größer ist als der zweite und dieser größer ist als der erste.

Ein derartiger Fahrzeugluftreifen ist beispielsweise aus der JP 60 203505 A bekannt. Der Laufstreifen dieses Reifens ist mit einer Anzahl von in Umfangsrichtung umlaufenden Umfangsrillen versehen, wobei die eine Rillenflanke unter einem konstanten Winkel zur radialen Richtung geneigt verläuft und die dieser gegenüberliegende Rillenflanke zwei sich unter unterschiedlichen Winkeln zur radialen Richtung verlaufende Rillenflankenabschnitte aufweist. Aus der EP 1 541 383 A ist ein Fahrzeugluftreifen mit einem Laufstreifen bekannt, in dessen Umfangsrillen Erhebungen ausgebildet sind.

Diese Erhebungen verlaufen von der einer Nutflanke über den Nutgrund zur gegenüberliegenden Nutflanke und sind unter einem Winkel von 10° bis 50° zur Erstreckungsrichtung der Umfangsrillen geneigt.

Bei dem aus der US-A-7,986,372 bekannten Reifen weist der Laufstreifen eine Anzahl von in Umfangsrichtung umlaufenden Umfangsrillen auf, wobei zumindest eine der beiden Rillenflanken dieser Umfangsrillen unmittelbar an die Profiloberfläche anschließend einen Flankenabschnitt aufweist, welcher durch Erhebungen rippenartig strukturiert ist. Der Flankenabschnitt bzw. die Erhebungen sind unter einem Winkel von 30° bis 45° zur radialen Richtung orientiert. Diese Umfangsrillen sollen vor allem die Schneegriffeigenschaften der Reifen verbessern. Aus der EP-B-0 547 236 ist ein Fahrzeugreifen bekannt, dessen Laufstreifen zumindest eine Umfangsrille mit Profilblöcke begrenzenden Rillenflanken aufweist, welche mindestens zwei, etwa im mittleren Bereich der Rillenflanken angeordnete, sich zum Rillengrund verbreiternde und sägezahnförmig ausgeführte Ansätze aufweisen. Bei einer unterschiedlichen Umfangslänge der Profilblöcke ist eine unterschiedliche Anzahl von Ansätzen vorgesehen. Durch diese Ausgestaltung soll bei einer nicht zu starken Unterteilung eines Laufstreifenprofils durch Querrillen die Übertragung der Antriebs- und Bremskräfte erhöht werden.

Es ist bekannt, dass gerippte Bereiche an Rillenflanken von Umfangsrillen für die WinterPerformance, insbesondere die Griffeigenschaften des Laufstreifens auf Schnee, von Vorteil sein können. Bekannt ist jedoch auch, dass rippenartig strukturierte Bereiche, Vorsprünge und dergleichen an Rillenflanken aus Aquaplaningverhalten des Reifens beeinträchtigen.

Der Erfindung liegt die Aufgabe zugrunde, bei einem Reifen der eingangs genannten Art diesen Zielkonflikt - gute Winterperformance und Erhalt guter Aquaplaningeigenschaften - zufriedenstellend zu lösen. Die Erfindung zielt daher darauf ab, einen Reifen der eingangs genannten Art entsprechend zu verbessern.

Gelöst wird die gestellte Aufgabe erfindungsgemäß dadurch, dass der radial innere Flankenabschnitt durch eine Vielzahl von in Laufstreifenquerrichtung orientierten Erhebungen rippenartig strukturiert ist.

Die Rippung an einem Rillenflankenabschnitt nahe des Rillengrundes verbessert die Schneegriffeigenschaften des Laufstreifens. Zwischen den einzelnen Erhebungen der Rippung wird Schnee innerhalb der Umfangsrille gehalten, was eine gute Schnee-Schnee-Reibung unterstützt. Zusätzlich verbessert die nur einseitig an der der Außenschulter zugewandten Rillenflanke nahe des Rillengrundes vorgesehene Rippung die positiven Eigenschaften einer asymmetrisch ausgeführten Umfangsrille, insbesondere durch Abstützeffekte beim Trockenhandling, wobei das Drainagevermögen der Umfangsrille und damit das Aquaplaningverhalten nicht beeinträchtigt werden.

Die stabilisierende Wirkung der Erhebungen wird dadurch begünstigt, dass diese an den Rillengrund und den axial äußeren Flankenabschnitt angebunden sind.

Sowohl für die Winterperformance des Reifens als auch die Beibehaltung guter Aquaplaningeigenschaften ist es von Vorteil, wenn die Höhe der Erhebungen zwischen 1,5 mm und 2 mm und die maximale Querschnittsbreite der Erhebungen ebenfalls zwischen 1,5 mm und 2 mm betragen.

Für die oben erwähnten Abstützeffekte ist es günstig, wenn die in der Art einer Rippung ausgeführten Erhebungen insbesondere derart angeordnet sind, dass sie unmittelbar aneinander anschließen, wobei sie eine Querschnittsform aufweisen, welche an ihrer Basis am Flankenabschnitt ihre größte Querschnittsbreite aufweist.

Für die Handlingeigenschaften des Reifens auf trockenen Fahrbahnen ist es von Vorteil, wenn die beiden Rillenflanken unter bestimmten Neigungswinkeln zur Radialen verlaufen. Dabei sollte der Neigungswinkel, der der Außenschulter zugewandten Rillenflanke zwischen 0° und 20°, insbesondere zwischen 3° und 8°, betragen, der Neigungswinkel des radial äußeren Flankenabschnittes der der Außenschulter abgewandten Rillenflanke zwischen 10° und 25°, insbesondere zwischen 8° und 15°, und der Neigungswinkel des radial inneren Flankenabschnittes der der Außenschulter abgewandten Rillenflanke zwischen 30° und 45°, insbesondere zwischen 38° und 42°.

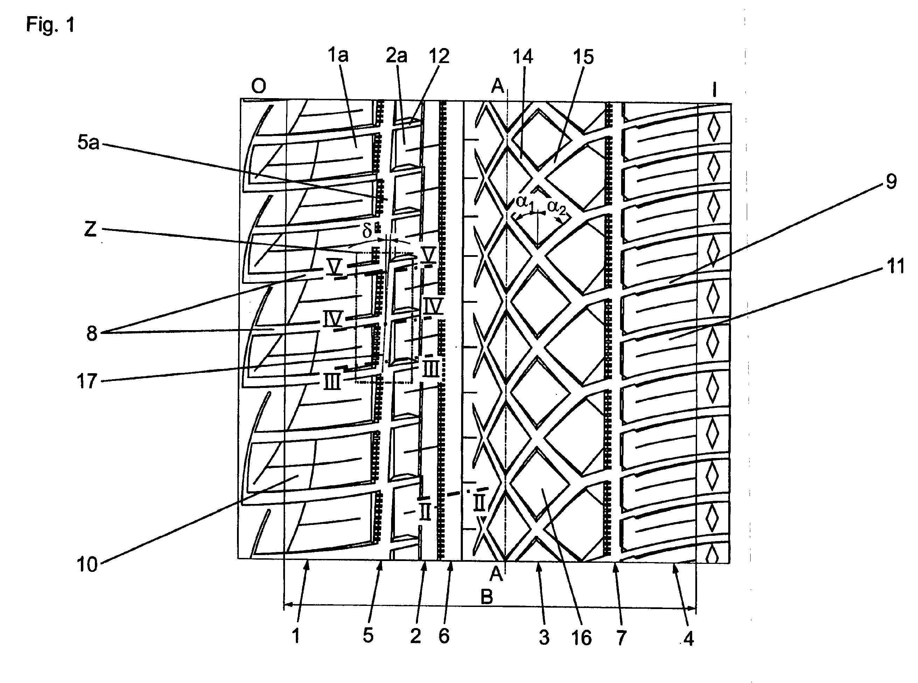

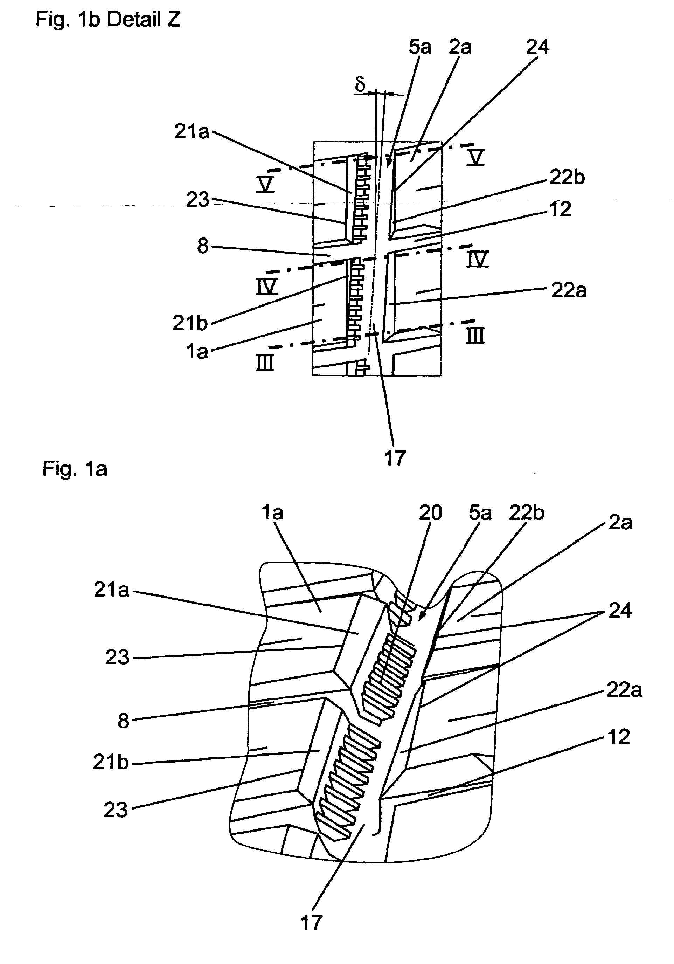

Weitere Merkmale, Vorteile und Einzelheiten der Erfindung werden nun anhand der Zeichnung, die Ausführungsbeispiele darstellt, näher beschrieben. Dabei zeigen
Fig. 1 eine Draufsicht auf eine Teilabwicklung eines profilierten Laufstreifens für einen Fahrzeugluftreifen für Personenkraftwagen,
Fig. 1a eine Ansicht eines Details aus Fig. 1,
Fig. 1 b eine Draufsicht auf ein Detail aus Fig. 1,
Fig. 2 einer vergrößerte Schnittdarstellung entlang der Linie II-II der Fig. 1,
Fig. 3 eine vergrößerte Schnittdarstellung entlang der Linie III-III der Fig. 1 bzw. der Fig. 1b,
Fig. 4 eine vergrößerte Schnittdarstellung entlang der Linie IV-IV der Fig. 1 bzw. der Fig. 1b und
Fig. 5 eine vergrößerte Schnittdarstellung entlang der Linie V-V der Fig. 1 bzw. der Fig. 1b.

Fig. 1 zeigt ein asymmetrisches Laufstreifenprofil für einen PKW-Reifen radialer Bauart, welcher insbesondere für einen ganzjährigen Einsatz geeignet ist. In Fig. 1 ist mit A-A die zentrale, den Laufstreifen in zwei Hälften teilende Äquatorebene bzw. Äquatorlinie bezeichnet, mit B die Aufstandsbreite des Laufstreifens, wenn ein Reifen mit diesem Laufstreifen auf einer Felge montiert ist und sich im Betriebszustand unter Normbedingungen findet, mit O die bei am Fahrzeug montierten Reifen außen befindliche Außenschulter und mit I die zur Fahrzeugmitte weisende Innenschulter.

Wie Fig. 1 zeigt, weist das Profil des Laufstreifens - von der Außenschulter O bis zur Innenschulter I - eine Profilblockreihe 1, eine Umfangsrippe 2, ein breites, ca. 40 % der Aufstandsbreite B einnehmendes, in Umfangsrichtung umlaufendes, in Profilblöcke 16 gegliedertes Profilband 3 und an der Innenschulter I eine weitere Profilblockreihe 4 auf. Zwischen der Profilblockreihe 1 und der Umfangsrippe 2 sowie dieser und dem Profilband 3 verläuft jeweils eine in Umfangsrichtung umlaufende Umfangsrille 5 bzw. 6, deren Breite an der Laufstreifenoberfläche in der Größenordnung von 7 mm bis 8 mm beträgt. Die Profilblockreihe 4 an der Innenschulter I ist vom Profilband 3 durch eine in Umfangsrichtung umlaufende Umfangsrille 7 getrennt, die schmäler ist als die Umfangsrillen 5 bzw. 6.

Die beiden schulterseitig gelegenen Profilblockreihen 1 und 4 sind jeweils durch Querrillen 8 bzw. 9 in Profilblöcke 10 bzw. 11 gegliedert. Die Querrillen 8 und 9 verlaufen im Wesentlichen in axialer Richtung bzw. unter einem von der axialen Richtung nur geringfügig abweichenden spitzen Winkel. Die Umfangsrippe 2 ist durch Sacknuten 12 in blockartige Profilelemente 2a gegliedert. Die Sacknuten 12 verlaufen von der Umfangsrille 5 ausgehend in Fortsetzung der Querrillen 8 und erstrecken sich etwa über zwei Drittel der axialen Breite der Umfangsrippe 2.

Im breiten Profilband 3 bilden zwei Scharen von gegensinnig diagonal über den Laufstreifen verlaufenden Schrägrillen, 14, 15 eine Art Netz, welches die Profilblöcke 16 einschließt. Die jeweils im Wesentlichen zueinander parallel verlaufenden Schrägrillen 14 bzw. 15 verlaufen unter Winkeln α₁ bzw. α₂ zur Reifenumfangsrichtung. Die Winkel α₁, α₂ der Schrägrillen 14, 15 ändern sich über den Verlauf der Rillen 14, 15 kontinuierlich, betragen jedoch über einen Großteil der Erstreckung der Rillen 14, 15 zwischen 30° und 70°. Die Schrägrillen 14, 15 enden laufstreifeninnenseitig innerhalb der Profilbänder 3 in einem geringen Abstand von der Umfangsrille 6.

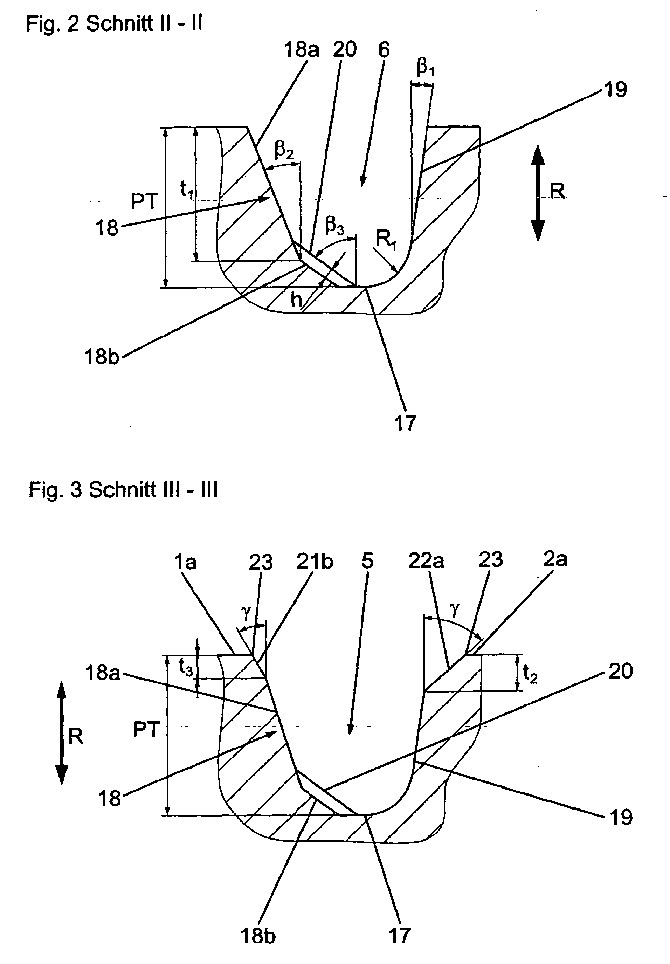

Die Umfangsrillen 5, 6 und 7 weisen jeweils einen besonderen Querschnitt auf, welcher beispielhaft anhand der Fig. 2, welche einen Querschnitt durch die Umfangsrille 6 darstellt, näher beschrieben wird. Die Umfangsrille 6 weist einen Rillengrund 17, eine zur Innenschulter I weisende Rillenflanke 19 und eine zur Außenschulter O weisende Rillenflanke 18 auf. Die Rillenflanke 19 begrenzt daher das Profilband 3, die Rillenflanke 18 die Umfangsrippe 2. Zumindest die Rillenflanke 18 ist gegenüber der radialen Richtung (Pfeil R in Fig. 2) geneigt, derart, dass die Umfangsrille 6 in Richtung Laufstreifenoberfläche breiter wird. Die Rillenflanke 19 schließt mit der radialen Richtung einen Winkel β₁ ein, welcher zwischen 0° und 20°, insbesondere zwischen 3° und 8°, beträgt. Die Rillenflanke 18 setzt sich in radialer Richtung aus zwei Flankenabschnitten 18a, 18b zusammen, wobei der Flankenabschnitt 18a von der Profiloberfläche aus gemessen bis in eine Tiefe t₁ reicht, die zwischen 70 % und 80 % der Profiltiefe PT beträgt. Der Flankenabschnitt 18a verläuft unter einem Winkel β₂ zur radialen Richtung R, welcher zwischen 1° und 25°, insbesondere zwischen 8° und 15°, beträgt. Der Flankenabschnitt 18b verläuft bis zum Rillengrund 17 und ist gegenüber der radialen Richtung unter einem Winkel β₃ geneigt, wobei β₃ > β₂ > β₁ gilt. Der Winkel β₃ beträgt zwischen 30° und 45°, insbesondere zwischen 38° und 42°. Der Übergang zwischen dem Rillengrund 17 und der Rillenflanke 19 ist mit einem Krümmungsradius R₁ gerundet ausgeführt, wobei für R₁ die Beziehung 2 mm ≤ R₁ ≤ 6 mm gilt, insbesondere 3 mm ≤ R₁ ≤ 4 mm. Der Rillengrund 17 erstreckt sich in axialer Richtung zwischen dem mit dem Radius R₁ gerundeten Übergangsbereich und dem Flankenabschnitt 18b und kann eine Breite bzw. axiale Erstreckung von bis zu 6 mm aufweisen. Der Rillenquerschnitt kann auch derart ausgeführt sein, dass an den Flankenabschnitt 18b unmittelbar der gerundete Übergangsbereich zur Rillenflanke 19 anschließt, wobei dieser Übergangsbereich dann auch den Rillengrund umfasst.

Der Flankenabschnitt 18b ist gemäß der Erfindung gerippt und weist eine Vielzahl von parallel zueinander und in Laufstreifenquerrichtung orientierten Erhebungen 20 auf. Die Erhebungen 20 weisen eine dreieckige Querschnittsform auf, erstrecken sich parallel zum Flankenabschnitt 18b und sind sowohl an den Rillengrund 17 als auch den Flankenabschnitt 18a angebunden. Die Höhe h der Erhebungen 20 beträgt zwischen 1,5 und 2 mm, ihre Breite in Umfangsrichtung an ihrer am Flankenabschnitt 18b befindlichen Basis beträgt ebenfalls zwischen 1,5 und 2 mm. Die Erhebungen 20 schließen unmittelbar aneinander an.

Bei weiteren, nicht gezeigten Ausführungsformen der Erfindung können die Erhebungen 20 einen anderen Querschnitt, beispielsweise einen trapezförmigen, einen etwa rechteckigen, einen gerundeten, beispielsweise halbkreisförmigen, Querschnitt und dergleichen aufweisen und sie können entweder unmittelbar aneinander zuschließen oder voneinander geringfügig, in der Größenordnung von 0,5 bis 3 mm, beabstandet sein. Es ist ferner möglich, die Erhebungen 20 derart anzuordnen, dass sie gegenüber der Laufstreifenquerrichtung unter einem spitzen Winkel von maximal 30° geneigt verlaufen.

Die durch die Erhebungen 20 nahe des Rillengrundes 17 gebildete rippenartige Struktur erhöht die Schneegriffeigenschaften des Laufstreifens, insbesondere wird zwischen den einzelnen Erhebungen 20 Schnee in der Umfangsrille 6 gehalten, wodurch die Schnee-Schnee-Reibung zum Untergrund deutlich verbessert wird. Die rippenartige Struktur ist dabei nur an der Außenseite der Umfangsrille 6 ausgebildet und hat eine stabilisierende Wirkung auf die an die Rillenflanke 18 anschließenden Profilelemente, was beim Fahren auf trockenen Fahrbahnen von Vorteil ist, insbesondere das Trockenhandling verbessert. Durch die spezielle Anordnung der rippenartigen Struktur wird das Aquaplaningverhalten des Reifens nicht nachteilig beeinflusst.

Eine weitere besondere Ausgestaltung weist der Laufstreifen im Bereich der Umfangsrille 5 auf, welche zwischen der Profilblockreihe 1 an der Außenschulter O und der Umfangsrippe 2 verläuft. Wie Fig. 1 in Verbindung mit Fig. 1a und den Schnittdarstellungen in Fig. 3 bis Fig. 5 zeigt, sind jeweils zwei Blöcke 1a und zwei Profilelemente 2a derart ausgebildet, dass sich die Umfangsrille 5 in Umfangsrichtung aus Umfangsabschnitten 5a zusammensetzt, welche somit jeweils über zwei einander benachbarte Profilblöcke 1 a und die beiden diesen gegenüber liegenden blockartigen Profilelementen 2a der Umfangsrippe 2 verlaufen. Wie Fig. 1b zeigt, erstreckt sich der Rillengrund 17 innerhalb der Umfangsabschnitte 5a unter einem konstanten Winkel δ, welcher zwischen 2° und 7° gewählt wird, zur Umfangsrichtung. Die einzelnen Umfangsabschnitte 5a sind daher gegeneinander in axialer Richtung geringfügig versetzt.

An der Profiloberfläche sind die Profilblöcke 1a und die diesen gegenüberliegenden blockartigen Elemente 2a an ihren die Umfangsabschnitte 5a begrenzenden Bereichen über die Länge der Umfangsabschnitte 5a angefast, wobei durch die Anfasungen Schrägflächen 21a, 21b und 22a, 22b gebildet sind, welche durch die Querrillen 8 und 12 voneinander getrennt sind, wobei die Schrägflächen 21a, 21b und 22a, 22b jedoch derart ausgebildet sind, dass sie über die Rillen 8, 12 zu einer einheitlichen Fläche verbunden werden können (siehe Fig. 1a). Die Schrägflächen 21a, 21b und 22a, 22b sind bei neuem Reifen an der Profiloberfläche durch Kanten 23, 24 begrenzt, welche parallel zueinander und in Reifenumfangsrichtung verlaufen. Die Schrägflächen 21a, 21b und 22a, 22b sind Trapeze, deren eine Grundlinie entlang der Kante 23 bzw. 24 verläuft und deren zweite Grundlinie parallel zur Erstreckung des Rillengrundes 17 verläuft, wobei die Höhe der Trapezflächen zwischen 1,5 mm und 2,5 mm beträgt. Die Schrägflächen 21a, 21b und 22a, 22b sind somit gegenüber der radialen Richtung R unter einem sich in ihrer Umfangserstreckung ändernden Winkel γ geneigt.

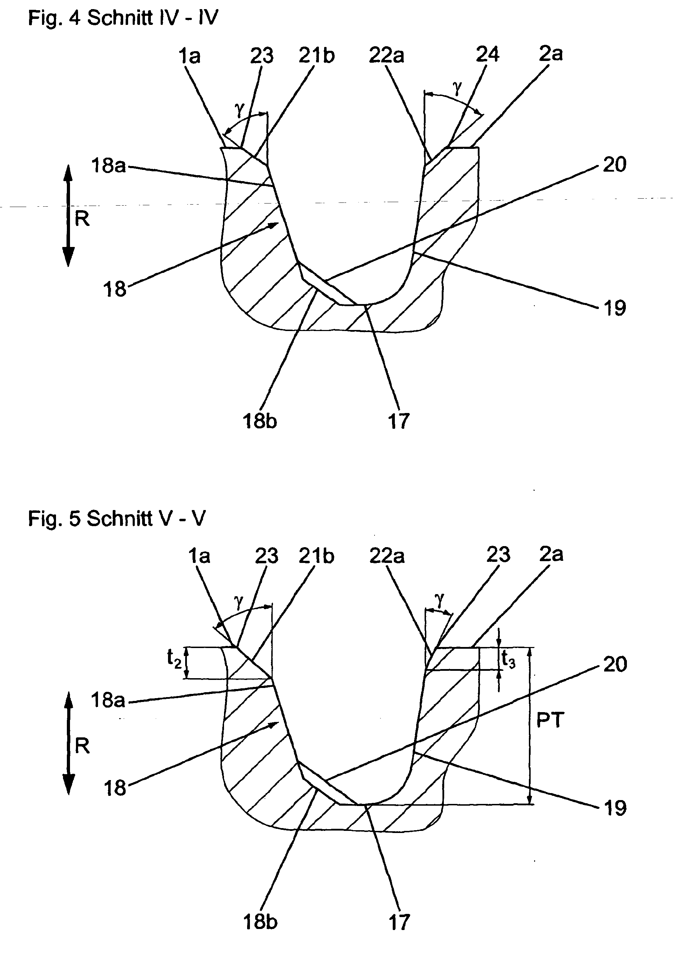

Anhand der Schnittdarstellungen in Fig. 3 bis Fig. 5 wird nun diese Ausführung der Schrägflächen 21a, 21b und 22a, 22b näher erläutert. Die Umfangsrille 5 ist analog zur bereits beschriebenen Umfangsrille 6 von einem Rillengrund 17, einer Rillenflanke 19 und einer Rillenflanke 18 mit Flankenabschnitten 18a und 18b begrenzt, wobei am Flankenabschnitt 18b die Rippenstruktur aus Erhebungen 20 ausgebildet ist, wie oben beschrieben. Fig. 3 zeigt einen Querschnitt knapp vor dem einen Ende eines Umfangsabschnittes 5a. An die Rillenflanke 18 schließt zur Laufstreifenoberfläche die Schrägfläche 21b an, an der gegenüberliegenden Rillenflanke 19 schließt die Schrägfläche 22a an. Die Schrägfläche 22a reicht an dieser Stelle bis auf eine Tiefe t₂, die, gemessen von der Profiloberfläche, zwischen 20% und 35% der Profiltiefe PT beträgt, die Schrägfläche 21b bis auf eine Tiefe t₃ < t₂ von bis zu 25 % der Profiltiefe PT. Der Neigungswinkel γ der Fläche 22a relativ zur radialen Richtung R beträgt bei der gezeigten Ausführung an dieser Stelle etwa 50°, der Neigungswinkel γ der Schrägfläche 21b ist etwas kleiner und beträgt etwa 30°. Im mittleren Bereich des Umfangsabschnittes 5a, in unmittelbarer Nähe zu den Querrillen 8 und 12, weist der Umfangsabschnitt 5a den in Fig. 4 gezeigten Querschnitt auf. Die Rillenflanken 18 und 19 gehen in die Schrägflächen 21b, 22a über, deren Neigungswinkel γ an dieser Stelle etwa gleich groß sind und bei der gezeigten Ausführung etwa 45° bis 50° betragen. Fig. 5 zeigt einen Querschnitt knapp vor dem zweiten Endes des Umfangsabschnittes 5a. Die Schrägfläche 22b, welche an die Rillenflanke 19 anschließt, verläuft unter einem Neigungswinkel γ von 30° zur Radialen, die Fläche 21a an der gegenüberliegenden Rillenflanke 18 unter einem Neigungswinkel γ von 50° zur radialen Richtung. Der Neigungswinkel γ ändert sich auf die geschilderte Weise über den Umfangsverlauf der Schrägflächen 21a, 21b und 22a, 22b in einem Bereich von 25° bis 60°.

Durch diese erfmdungsgemäße Ausgestaltung sind an der Profiloberfläche gerade und in Umfangsrichtung durchgehende Kanten gebildet, zum Rillengrund zu aber ein seitlicher Blockversatz. Es werden daher viele Kanten, die für einen guten Schneegriff erforderlich sind, zur Verfügung gestellt, wobei der sogenannte Look-Through der Umfangsrille 5 nicht so weit reduziert wird, dass ein merkbarer Einfluss auf die Aquaplaningeigenschaft des Reifens eintritt.

Die Erfindung ist auf die dargestellten Ausführungsformen nicht eingeschränkt. Insbesondere können rippenartig strukturierte Bereich in einer oder mehreren Umfangsrillen vorgesehen sind, Blockversätze und durch Anfasungen gebildete Schrägflächen können ebenfalls im Bereich einer oder mehrerer Umfangsrillen ausgebildet sein.

### Bezugsziffernliste

- 1: Profilblockreihe
- 1a: Profilblock
- 2: Umfangsrippe
- 2a: blockartiges Profilelement
- 3: breites Profilband
- 4: Profilblockreihe
- 5: Umfangsrille
- 5a: Umfangsabschnitte
- 6: Umfangsrille
- 7: Umfangsrille
- 8: Querrille
- 9: Querrille
- 10: Profilblock
- 11: Profilblock
- 12: Sacknut
- 14: Schrägrille
- 15: Schrägrille
- 16: Profilblock
- 17: Rillengrund
- 18: Rillenflanke
- 18a.: Flankenabschnitt
- 18b.: Flankenabschnitt
- 19: Rillenflanke
- 20: Erhebungen
- 21a: Schrägfläche
- 21b: Schrägfläche
- 22a: Schrägfläche
- 22b: Schrägfläche
- 23: Kante
- 24: Kante

## Patentansprüche

1. Fahrzeugluftreifen mit einem Laufstreifen, welcher durch Umfangsrillen (5, 6, 7) und Querrillen (8, 9) in Profilelemente, wie Profilblöcke (1a, 2a) oder Umfangsrippen (2), gegliedert ist, und welcher eine, bezogen auf ein Fahrzeug, außenseitig gelegene Außenschulter (O) und eine der Fahrzeuglängsachse zugewandte Innenschulter (I) aufweist, wobei der Laufstreifen zumindest eine Umfangsrille (6) mit einem sich über den Umfang des Laufstreifens erstreckenden Rillengrund (17) und mit beidseitig des Rillengrundes (17) sich radial nach außen erstreckende, die Umfangsrille (6) begrenzenden Rillenflanken (18, 19) aufweist, wobei die der Außenschulter (O) zugewandte Rillenflanke (19) der Umfangsrille (6) unter einem ersten Neigungswinkel (β₁) zur radialen Richtung (R) verläuft und die dieser gegenüber liegende Rillenflanke (18) zwei Flankenabschnitte (18a, 18b) aufweist, wobei der radial äußere Flankenabschnitt (18a) unter einem zweiten Neigungswinkel (β₂) zur radialen Richtung (R) und der radial innere Flankenabschnitt (18b) unter einem dritten Neigungswinkel (β₃) zur radialen Richtung verläuft, wobei der dritte Neigungswinkel (β₃) größer ist als der zweite und dieser größer ist als der erste,
**dadurch gekennzeichnet,**
**dass** der radial innere Flankenabschnitt (18b) durch eine Vielzahl von in Laufstreifenquerrichtung orientierten Erhebungen (20) rippenartig strukturiert ist.

2. Fahrzeugluftreifen nach Anspruch 1, **dadurch gekennzeichnet, dass** die Erhebungen (20) an den Rillengrund (17) und den axial äußeren Flankenabschnitt (18a) angebunden sind.

3. Fahrzeugluftreifen nach Anspruch 1 oder 2, **dadurch gekennzeichnet, dass** die Höhe (h) der Erhebungen (20) zwischen 1,5 mm und 2 mm beträgt.

4. Fahrzeugluftreifen nach einem der Ansprüche 1 bis 3, **dadurch gekennzeichnet, dass** die maximale Querschnittsbreite der Erhebungen (20) zwischen 1,5 mm und 2 mm beträgt.

5. Fahrzeugluftreifen nach einem der Ansprüche 1 bis 4, **dadurch gekennzeichnet, dass** die Erhebungen (20) unmittelbar aneinander anschließen.

6. Fahrzeugluftreifen nach einem der Ansprüche 1 bis 5, **dadurch gekennzeichnet, dass** die Erhebungen (20) eine Querschnittsform aufweisen, welche an ihrer Basis am Flankenabschnitt (18b) ihre größte Querschnittsbreite aufweist.

7. Fahrzeugluftreifen nach Anspruch 1, **dadurch gekennzeichnet, dass** der Neigungswinkel (β₁) der der Außenschulter (O) zugewandten Rillenflanke (19) zwischen 0° und 20°, insbesondere zwischen 3° und 8°, beträgt.

8. Fahrzeugluftreifen nach Anspruch 1, **dadurch gekennzeichnet, dass** der Neigungswinkel (β₂) des radial äußeren Flankenabschnittes (18a) der der Außenschulter (O) abgewandten Rillenflanke (18) zwischen 10° und 25°, insbesondere zwischen 8° und 15°, beträgt.

9. Fahrzeugluftreifen nach Anspruch 1, **dadurch gekennzeichnet, dass** der Neigungswinkel (β₃) des radial inneren Flankenabschnittes (18b) der der Außenschulter (O) abgewandten Rillenflanke (18) zwischen 30° und 45°, insbesondere zwischen 38° und 42°, beträgt.

10. Fahrzeugluftreifen nach einem der Ansprüche 1 bis 9, **dadurch gekennzeichnet, dass** der radial äußere Flankenabschnitt (18a) der der Außenschulter (O) abgewandten Rillenflanke (18) bis auf eine von der Laufstreifenoberfläche in radiale Richtung (R) gemessene Tiefe (t₁) reicht, die zwischen 50% und 80% der Profiltiefe (PT) beträgt.

## Claims

1. Pneumatic vehicle tire with a tread rubber, which is divided by circumferential grooves (5, 6, 7) and transverse grooves (8, 9) into tread elements, such as tread bars (1a, 2a) or circumferential ribs (2), and which has an outer shoulder (0), situated on the outside, with respect to a vehicle, and an inner shoulder (I), facing the longitudinal axis of the vehicle, the tread rubber having at least one circumferential groove (6) with a groove base (17) extending over the circumference of the tread rubber and with groove flanks (18, 19) extending radially outward on both sides of the groove base (17) and delimiting the circumferential groove (6), the groove flank (19) of the circumferential groove (6) that is facing the outer shoulder (0) running at a first angle of inclination (β₁) to the radial direction (R) and the groove flank (18) lying opposite said first flank having two flank portions (18a, 18b), the radially outer flank portion (18a) running at a second angle of inclination (β₂) to the radial direction (R) and the radially inner flank portion (18b) running at a third angle of inclination (β₃) to the radial direction, the third angle of inclination (β₃) being greater than the second and the second being greater than the first, **characterized in that** the radially inner flank portion (18b) is structured in a rib-like manner by a multiplicity of elevations (20) oriented in the transverse direction of the tread rubber.

2. Pneumatic vehicle tire according to Claim 1, **characterized in that** the elevations (20) are bonded to the groove base (17) and the axially outer flank portion (18a).

3. Pneumatic vehicle tire according to Claim 1 or 2, **characterized in that** the height (h) of the elevations (20) is between 1.5 mm and 2 mm.

4. Pneumatic vehicle tire according to one of Claims 1 to 3, **characterized in that** the maximum cross-sectional width of the elevations (20) is between 1.5 mm and 2 mm.

5. Pneumatic vehicle tire according to one of Claims 1 to 4, **characterized in that** the elevations (20) directly adjoin one another.

6. Pneumatic vehicle tire according to one of Claims 1 to 5, **characterized in that** the elevations (20) have a cross-sectional form which has its greatest cross-sectional width at its base on the flank portion (18b).

7. Pneumatic vehicle tire according to Claim 1, **characterized in that** the angle of inclination (β₁) of the groove flank (19) facing the outer shoulder (O) is between 0° and 20°, in particular between 3° and 8°.

8. Pneumatic vehicle tire according to Claim 1, **characterized in that** the angle of inclination (β₂) of the radially outer flank portion (18a) of the groove flank (18) facing away from the outer shoulder (O) is between 10° and 25°, in particular between 8° and 15°.

9. Pneumatic vehicle tire according to Claim 1, **characterized in that** the angle of inclination (β₃) of the radially inner flank portion (18b) of the groove flank (18) facing away from the outer shoulder (0) is between 30° and 45°, in particular between 38° and 42°.

10. Pneumatic vehicle tire according to one of Claims 1 to 9, **characterized in that** the radially outer flank portion (18a) of the groove flank (18) facing away from the outer shoulder (0) reaches to a depth (t₁), measured from the surface of the tread rubber in the radial direction (R), which is between 50% and 80% of the tread depth (PT).

## Revendications

1. Pneumatique de véhicule comprenant une bande de roulement qui est divisée par des gorges périphériques (5, 6, 7) et des gorges transversales (8, 9) en éléments profilés, tels que des blocs profilés (1a, 2a) ou des nervures périphériques (2), et qui présente un épaulement extérieur (0) placé du côté extérieur, par rapport à un véhicule, et un épaulement intérieur (I) tourné vers l'axe longitudinal du véhicule, la bande de roulement présentant au moins une gorge périphérique (6) avec une base de gorge (17) s'étendant sur la périphérie de la bande de roulement et avec des flancs de gorge (18, 19) limitant la gorge périphérique (6), s'étendant radialement vers l'extérieur de chaque côté de la base de gorge (17), le flanc de gorge (19) tourné vers l'épaulement extérieur (0) de la gorge périphérique (6) s'étendant suivant un premier angle d'inclinaison (β₁) par rapport à la direction radiale (R) et le flanc de gorge (18) situé en regard de celui-ci présentant deux portions de flanc (18a, 18b), la portion de flanc radialement extérieure (18a) s'étendant suivant un deuxième angle d'inclinaison (β₂) par rapport à la direction radiale (R) et la portion de flanc radialement interne (18b) s'étendant suivant un troisième angle d'inclinaison (β₃) par rapport à la direction radiale, le troisième angle d'inclinaison (β₃) étant supérieur au deuxième et celui-ci étant supérieur au premier,
**caractérisé en ce que**
la portion de flanc radialement interne (18b) est structurée sous forme de nervures par une pluralité de rehaussements (20) orientés dans la direction transversale de la bande de roulement.

2. Pneumatique de véhicule selon la revendication 1, **caractérisé en ce que** les rehaussements (20) sont rattachés à la base de gorge (17) et à la portion de flanc (18a) axialement extérieure.

3. Pneumatique de véhicule selon la revendication 1 ou 2, **caractérisé en ce que** la hauteur (h) des rehaussements (20) est comprise entre 1,5 mm et 2 mm.

4. Pneumatique de véhicule selon l'une quelconque des revendications 1 à 3, **caractérisé en ce que** la largeur maximale en section transversale des rehaussements (20) est comprise entre 1,5 mm et 2 mm.

5. Pneumatique de véhicule selon l'une quelconque des revendications 1 à 4, **caractérisé en ce que** les rehaussements (20) se raccordent directement les uns aux autres.

6. Pneumatique de véhicule selon l'une quelconque des revendications 1 à 5, **caractérisé en ce que** les rehaussements (20) présentent une forme en section transversale qui présente à sa base au niveau de la portion de flanc (18b) sa plus grande largeur en section transversale.

7. Pneumatique de véhicule selon la revendication 1, **caractérisé en ce que** l'angle d'inclinaison (β₁) du flanc de gorge (19) tourné vers l'épaulement extérieur (0) est compris entre 0° et 20°, notamment entre 3° et 8°.

8. Pneumatique de véhicule selon la revendication 1, **caractérisé en ce que** l'angle d'inclinaison (β₂) de la portion de flanc radialement extérieure (18a) du flanc de gorge (18) opposé à l'épaulement extérieur (0) est compris entre 10° et 25°, notamment entre 8° et 15°.

9. Pneumatique de véhicule selon la revendication 1, **caractérisé en ce que** l'angle d'inclinaison (β₃) de la portion de flanc radialement intérieure (18b) du flanc de gorge (18) opposé à l'épaulement extérieur (0) est compris entre 30° et 45°, en particulier entre 38° et 42°.

10. Pneumatique de véhicule selon l'une quelconque des revendications 1 à 9, **caractérisé en ce que** la portion de flanc radialement extérieure (18a) du flanc de gorge (18) opposé à l'épaulement extérieur (0) s'étend jusqu'à une profondeur (t₁) mesurée depuis la surface de la bande de roulement dans la direction radiale (R), qui est comprise entre 50 % et 80 % de la profondeur du profilé (PT).
